# EUROPÄISCHE PATENTSCHRIFT

(11) **EP 3 077 665 B1**
(45) Veröffentlichungstag und Bekanntmachung des Hinweises auf die Patenterteilung: **08.07.2020**
(21) Anmeldenummer: 14793535.7
(22) Anmeldetag: 04.11.2014
(51) Int. Cl.: F03D 13/00, F03D 80/70

(54) **ELEKTRISCHE SCHMIERSTOFFPUMPE MIT ZUSCHALTBAREM MECHANISCHEM ANTRIEB**
ELECTRIC LUBRICANT PUMP COMPRISING A CONNECTABLE DRIVE
POMPE ÉLECTRIQUE À LUBRIFIANT POURVUE D'UN ENTRAÎNEMENT MÉCANIQUE POUVANT ÊTRE ACTIVÉ

(30) Priorität: 04.12.2013 DE 102013224849
(43) Veröffentlichungstag der Anmeldung: 12.10.2016
(73) Patentinhaber: ZF Friedrichshafen AG, 88046 Friedrichshafen (DE)
(72) Erfinder: KRAPF, Markus, 88069 Tettnang (DE); BOHNER, Ulrich, 88090 Immenstaad am Bodensee (DE)
(74) Vertreter: ZF Friedrichshafen AG
(86) Internationale Anmeldenummer: PCT/EP2014/073618
(87) Internationale Veröffentlichungsnummer: WO 2015/082150

(56) Entgegenhaltungen:
- DE-A1- 3 002 391
- DE-A1-102008 013 728
- DE-A1-102011 016 558
- DE-C- 721 794
- JP-U- S6 447 939

## Beschreibung

Die Erfindung betrifft eine Vorrichtung zur Schmierstoffversorgung, insbesondere mindestens einer Komponente eines Getriebes, nach dem Oberbegriff von Anspruch 1. Eine derartige Vorrichtung eignet sich insbesondere als Notschmiervorrichtung für ein Getriebe einer Windkraftanlage.

Getriebe von Windkraftanlagen weisen gewöhnlich eine Schmierstoffpumpe auf, um Schmierstellen mittels Umlaufschmierung mit Schmierstoff zu versorgen. Die Getriebe sind hoch belastet. Ein Zusammenbruch der Schmierstoffversorgung kann daher in kurzer Zeit große Schäden hervorrufen, die letztlich zum Ausfall der Windkraftanlage führen.

Um dies zu vermeiden, kommen in Windkraftanlagen Notschmiervorrichtungen zum Einsatz. Derartige Vorrichtungen dienen dazu, im Notbetrieb, das heißt bei Ausfall einer für den Regelbetrieb vorgesehenen Schmierstoffpumpe, die Schmierstoffversorgung des Getriebes sicherzustellen.

Aus der Druckschrift DE 10 2008 013 728 A1 ist eine Notschmiervorrichtung mit zwei Pumpen bekannt. Eine erste, elektrisch betriebene Pumpe versorgt das Getriebe im Regelbetrieb mit Schmierstoff. Im Notbetrieb wird eine zweite Pumpe zugeschaltet. Deren Funktion muss auch bei einem Stromausfall gewährleistet sein. Daher wird die zweite Pumpe nicht elektrisch angetrieben. Stattdessen ist eine Kupplung vorgesehen, die im Notbetrieb einen Kraftfluss zwischen dem Getriebe und der zweiten Pumpe herstellt.

Zur Betätigung der Kupplung ist ein Stellelement vorgesehen. Im Regelbetrieb, das heißt wenn eine Spannung anliegt, wird das Stellelement aktiviert. Das aktivierte Stellelement öffnet die Kupplung. Eine Feder ist so angebracht, dass die Feder beim Öffnen der Kupplung gespannt wird.

Wenn im Notbetrieb keine Spannung mehr anliegt und die erste Pumpe somit ausfällt, ist auch das Stellelement nicht mehr aktiv. Infolgedessen entspannt sich die Feder und schließt die Kupplung. Damit liegt die zweite Pumpe im Kraftfluss des Getriebes. Die Schmierstoffversorgung bleibt infolgedessen so lange gewährleistet, bis die Windkraftanlage gestoppt wurde.

Die Verwendung einer zweiten Pumpe zum Aufbau einer Notschmiervorrichtung bringt eine Reihe von Nachteilen mit sich. So erhöht die zweite Pumpe die Herstellungskosten des Getriebes. Darüber hinaus sind zusätzliche Leitungen und Anschlüsse erforderlich, um die zweite Pumpe in den Schmierstoffkreislauf des Getriebes zu integrieren. Sämtliche zusätzlich verbauten Komponenten erhöhen zudem das Gewicht des Getriebes und beanspruchen zusätzlichen Bauraum.

Ein weiterer Nachteil ergibt sich aus der Ansteuerung des Stellelements. Die Schmierstoffversorgung kann nur bei Störungen der Energieversorgung, nicht aber bei Defekten der ersten Pumpe aufrechterhalten werden. Da das Stellelement nur deaktiviert wird, wenn keine Spannung mehr anliegt, das heißt wenn die Energieversorgung der Windkraftanlage zusammengebrochen ist, führt ein Defekt der ersten Pumpe - der auch auftreten kann, wenn die Energieversorgung nicht gestört ist und eine Spannung anliegt - zum Zusammenbruch der Schmierstoffversorgung.

Ferner ist aus JP S64 479 39 U eine Vorrichtung mit einer Schmierstoffpumpe bekannt, die einen Verbrennungsmotor mit Öl versorgt.

Aufgabe der Erfindung ist es, die Schmierstoffversorgung eines Getriebes unter Umgehung der den aus dem Stand der Technik bekannten Lösungen innewohnenden Nachteile im Notbetrieb sicherzustellen.

Eine erfindungsgemäße Vorrichtung zur Schmierstoffversorgung, zur Schmierstoffversorgung mindestens einer Komponente eines Getriebes, insbesondere eines Getriebes einer Windkraftanlage, umfasst eine Schmierstoffpumpe und einen Motor. Zum Antrieb der Schmierstoffpumpe dient eine Antriebswelle. Der Motor ist ausgebildet, im Regelbetrieb die Antriebswelle anzutreiben. Dazu ist bevorzugt eine Motorwelle drehfest mit der Antriebswelle verbunden.

Darüber hinaus umfasst die Vorrichtung erfindungsgemäß eine erste Kupplung. Diese befindet sich in einem Kraftfluss zwischen einer im Kraftfluss des Getriebes befindlichen Welle und der Antriebswelle. Die erste Kupplung ist ausgebildet, diesen Kraftfluss zu schließen und/oder zu unterbrechen.

Kupplung wird hier als eine Bezeichnung für ein Mittel verwendet, das ausgebildet ist, einen Kraftfluss zwischen zwei Wellen herzustellen und/oder zu unterbrechen. Bei der ersten Kupplung handelt es sich also um ein Mittel, das ausgebildet ist, einen Kraftfluss zwischen der im Kraftfluss des Getriebes befindlichen Welle und der Antriebswelle herzustellen und/oder zu unterbrechen.

Bei der im Kraftfluss des Getriebes befindlichen Welle handelt es sich um eine Welle, die von dem Getriebe angetrieben bzw. gedreht wird. Eine Drehung des Getriebes, insbesondere der Antriebs- und/oder Abtriebswelle des Getriebes geht also mit einer Drehung der im Kraftfluss des Getriebes befindlichen Welle einher. Vornehmlich kann die im Kraftfluss des Getriebes befindliche Welle mit der Antriebs- oder Abtriebswelle identisch sein. Die im Kraftfluss des Getriebes befindliche Welle kann aber auch eine Zwischenwelle des Getriebes sein.

Somit bestehen zwei alternative Möglichkeiten, die Schmierstoffpumpe anzutreiben. Im Regelbetrieb unterbricht die erste Kupplung den Kraftfluss zwischen der im Kraftfluss des Getriebes befindlichen Welle und der Antriebswelle der Schmierstoffpumpe. Die Schmierstoffpumpe wird dann von dem Motor angetrieben. Bei einem Ausfall des Motors, das heißt im Notbetrieb, schließt die erste Kupplung den Kraftfluss zwischen der im Kraftfluss des Getriebes befindlichen Welle und der Antriebswelle. Dies führt dazu, dass die Schmierstoffpumpe von dem Getriebe angetrieben wird. Die erste Kupplung stellt also einen Kraftfluss zwischen dem Getriebe, beziehungsweise der im Kraftfluss des Getriebes befindlichen Welle, und der Schmierstoffpumpe bzw. der Antriebswelle der Schmierstoffpumpe her. Durch Schließen der ersten Kupplung entsteht eine drehfeste Verbindung zwischen der im Kraftfluss des Getriebes befindlichen Welle und der Antriebswelle der ersten Kupplung.

Damit neben der Schmierstoffpumpe nicht auch der Motor angetrieben wird und infolgedessen als Generator wirkt, kann das Getriebe mit einer zweiten Kupplung ausgestattet werden, die ausgebildet ist, einen Kraftfluss zwischen der Antriebswelle der Schmierstoffpumpe und dem Motor zu schließen und/oder zu unterbrechen. Im Regelbetrieb, das heißt wenn eine elektrische Spannung anliegt und der Motor die Schmierstoffpumpe antreibt, ist diese Kupplung geschlossen. Die zweite Kupplung stellt dann eine drehfeste Verbindung zwischen einer angetriebenen Welle des Motors und der Antriebswelle der Schmierstoffpumpe und somit einen Kraftfluss zwischen dem Motor und der Schmierstoffpumpe her. Im Notbetrieb unterbricht die zweite Kupplung diesen Kraftfluss und verhindert so, dass der Motor weiterdreht. Alternativ ist es möglich, im Notbetrieb den Motor mittels eines dafür vorgesehenen Schalters vom Stromnetz zu trennen.

Bei dem Motor kann es sich insbesondere um einen Elektromotor handeln. Dieser ist nur funktionsfähig, solange im Regelbetrieb eine elektrische Spannung anliegt. Um bei einer Störung der Energieversorgung, d.h. wenn die elektrische Spannung nicht mehr anliegt, die Schmierstoffversorgung zu gewährleisten, umfasst die Vorrichtung in einer bevorzugten Weiterbildung eine Feder. Die Feder ist so angeordnet, dass sie beim Öffnen der ersten Kupplung gespannt wird.

Feder bezeichnet hier ein Element mit Federfunktion, das heißt einen Speicher für Lageenergie. Die Feder speichert also Lageenergie, wenn sie gespannt wird. Durch Entspannung der Feder wird die Lageenergie wieder freigesetzt. Vorzugsweise handelt es sich bei der Feder um eine Spiralfeder.

Wenn die elektrische Spannung anliegt, wird die erste Kupplung weiterbildungsgemäß geöffnet. Erfindungsgemäss bleibt die Kupplung geöffnet, während die elektrische Spannung anliegt.

Vorzugsweise ist ein erstes Betätigungselement zum Öffnen der ersten Kupplung vorgesehen, das mit der Energieversorgung der Windkraftanlage gekoppelt ist. Wenn die elektrische Spannung anliegt, liegt also die elektrische Spannung insbesondere an dem ersten Betätigungselement an.

Wenn die Spannung an dem ersten Betätigungselement anliegt, wird das erste Betätigungselement aktiv und öffnet die erste Kupplung. Das erste Betätigungselement bleibt aktiv und hält die erste Kupplung offen, so lange die elektrische Spannung an dem ersten Betätigungselement anliegt. Bei geöffneter erster Kupplung und somit unterbrochenem Kraftfluss zwischen der im Kraftfluss des Getriebes befindlichen Welle und der Antriebswelle der Schmierstoffpumpe wird die Schmierstoffpumpe durch den Motor angetrieben.

Wenn keine elektrische Spannung an dem ersten Betätigungselement anliegt - insbesondere, wenn die Energieversorgung der Windkraftanlage zusammengebrochen ist, wird das erste Betätigungselement inaktiv und verliert seine Wirkung. Die Federkraft der beim Öffnen der ersten Kupplung gespannten Feder wirkt nun derart, dass sich die Kupplung schließt, wobei sich die Feder entspannt, und somit der Kraftfluss zwischen der im Kraftfluss des Getriebes befindlichen Welle und der Antriebswelle der Schmierstoffpumpe hergestellt wird. Die Feder schließt also die erste Kupplung, wenn keine elektrische Spannung an dem ersten Betätigungselement anliegt und hält die erste Kupplung geschlossen, so lange keine elektrische Spannung an dem ersten Betätigungselement anliegt. Der Antrieb der Schmierstoffpumpe erfolgt dann über das Getriebe.

Die oben beschriebenen Maßnahmen dienen der Aufrechterhaltung der Schmierstoffversorgung bei Störungen der Energieversorgung. Ohne weitere Vorkehrungen bliebe das Betätigungselement aber aktiv, wenn der Motor bei intakter Energieversorgung defekt ist und ausfällt. Um auch in diesem Fall die Schmierstoffpumpe betreiben zu können, umfasst eine weiterhin bevorzugte Weiterbildung ein Schaltelement zum Ein- und Ausschalten der, insbesondere an dem ersten Betätigungselement anliegenden, elektrischen Spannung.

Bei intakter Energieversorgung bewirkt das Einschalten, dass eine elektrische Spannung, insbesondere an dem ersten Betätigungselement, anliegt. Nach dem Ausschalten liegt entsprechend keine elektrische Spannung, insbesondere an dem ersten Betätigungselement, mehr an.

Im Regelbetrieb schaltet das Schaltelement die, insbesondere an dem ersten Betätigungselement anliegende, elektrische Spannung ein. Dies führt zur Aktivierung des ersten Betätigungselements, das die erste Kupplung öffnet und die Feder spannt. Damit ist der Kraftfluss zwischen der im Kraftfluss des Getriebes befindlichen Welle und der Antriebswelle der Schmierstoffpumpe unterbrochen, so dass der Motor die Schmierstoffpumpe antreiben kann.

Wenn die Schmierstoffpumpe hingegen defekt ist, schaltet das Schaltelement die, insbesondere an dem ersten Betätigungselement anliegende, Spannung aus. Hierdurch wird das erste Betätigungselement deaktiviert, so dass die beim Öffnen der Kupplung gespannte Feder sich entspannt und die Kupplung schließt. Infolgedessen wird der Kraftfluss zwischen der im Kraftfluss des Getriebes befindlichen Welle und der Antriebswelle der Schmierstoffpumpe geschlossen.

In einer weiterhin bevorzugten Weiterbildung wird die elektrische Spannung bei einem Defekt des Motors ausgeschaltet. Hierzu kann das Schaltelement mit einem Element zur Erkennung eines Defekts des Motors gekoppelt sein.

Wenn der Motor defekt ist, bleiben die rotierenden Elemente des Motors und der Schmierstoffpumpe, insbesondere die Antriebswelle, stehen. Als Element zur Erkennung eines Defekts der Schmierstoffpumpe eignet sich daher insbesondere ein Drehzahlsensor. Dieser kann etwa die Drehzahl der Antriebswelle der Pumpe messen. Erkennt der Sensor eine verminderte Drehzahl oder einen Stillstand, wird das Schaltelement initiiert, die Spannung auszuschalten, und damit den Notbetrieb einzuleiten.

Anstelle des Schaltelements kann die Vorrichtung in einer alternativen Weiterbildung neben dem ersten Betätigungselement ein zweites Betätigungselement aufweisen. Das erste Betätigungselement wird aktiviert, wenn die elektrische Spannung, insbesondere an dem ersten Betätigungselement, anliegt. Es ist ausgebildet, bei Aktivierung die erste Kupplung zu öffnen.
Das zweite Betätigungselement ist zwischen dem ersten Betätigungselement und der ersten Kupplung angeordnet, damit es das erste Betätigungselement überlagern kann. Während also die elektrische Spannung, insbesondere an dem ersten Betätigungselement, anliegt und das erste Betätigungselement aktiviert ist, kann das zweite Betätigungselement die erste Kupplung schließen und so den Notbetrieb der Schmierstoffpumpe initiieren.

Analog zu dem Schaltelement schließt das zweite Betätigungselement die erste Kupplung vorzugsweise, wenn die Schmierstoffpumpe defekt ist. Auch das zweite Betätigungselement kann dazu mit einem Mittel zur Erkennung eines Defekts des Motors gekoppelt sein.

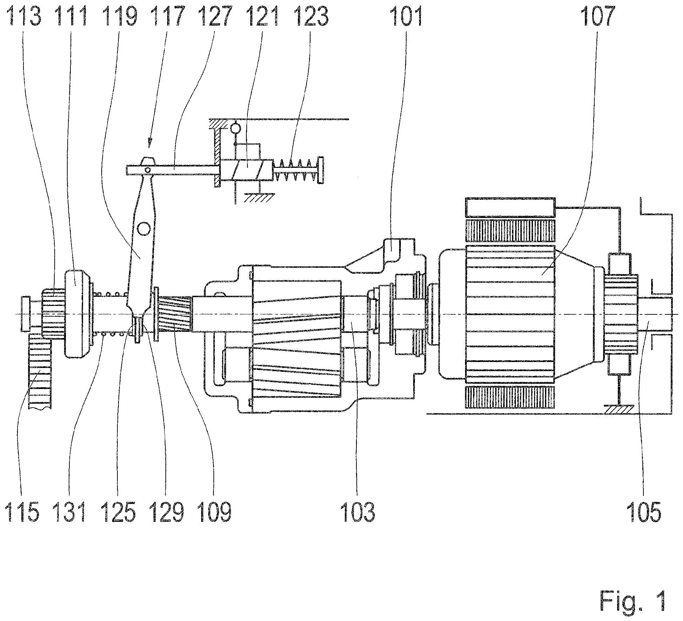

Ein Ausführungsbeispiel der Erfindung, das im Folgenden näher erläutert wird, ist in Fig. 1 dargestellt. Im Einzelnen zeigt:
- Fig. 1: eine Schmierstoffpumpe mit Elektromotor und zuschaltbarem mechanischem Antrieb.

Die in Fig. 1 dargestellte Schmierstoffpumpe 101 dient dazu, Schmierstellen eines Getriebes mit Schmierstoff zu versorgen. Der Antrieb der Schmierstoffpumpe 101 erfolgt über eine Antriebswelle 103. Die Antriebswelle 103 führt durch das Gehäuse der Schmierstoffpumpe 101 hindurch und ist an beiden Enden von außen zugänglich.

An einem ersten - in Fig. 1 rechts dargestellten - Ende ist die Antriebswelle 103 drehfest mit einer angetriebenen Welle 105 eines Elektromotors 107 gekoppelt. Die Antriebswelle 103 der Schmierstoffpumpe 101 und die Welle 105 des Elektromotors 107 drehen sich um eine gemeinsame Achse. Auf diese Weise kann der Elektromotor 107 die Schmierstoffpumpe 101 antreiben.

Ein zweites - in Fig. 1 auf der linken Seite dargestelltes - Ende der Antriebswelle 103 ist mit einem Mitnahmeprofil 109 versehen. Das Mitnahmeprofil 109 wird durch eine axial, d.h. parallel zu der Drehachse der Antriebswelle 103 und der Welle 105 des Elektromotors 107, verlaufende Außenverzahnung gebildet. Ein Ritzel 111 weist eine dazu passende Innenverzahnung auf. Die Innenverzahnung des Ritzels 111 und die Außenverzahnung des Mitnahmeprofils 109 greifen so ineinander, dass das Ritzel 111 drehfest mit der Antriebswelle 103 verbunden ist. Dabei kann das Ritzel 111 in axialer Richtung auf der Antriebswelle 103 beziehungsweise auf dem Mitnahmeprofil 109 verschoben werden.

Darüber hinaus weist das Ritzel 111 eine Außenverzahnung 113 auf. Die Außenverzahnung 113 ist so ausgebildet, dass sie mit einem Zahnrad 115 kämmen kann. Das Zahnrad 115 liegt im Kraftfluss eines Getriebes, das heißt es wird von dem Getriebe angetrieben.

Eine kämmende Verbindung zwischen der Außenverzahnung 113 des Ritzels 111 und dem Zahnrad 115 kommt zustande, wenn das Ritzel 111 in eine erste Richtung - in Fig. 1 nach links - verschoben wird. Wird das Ritzel 111 hingegen in eine zweite Richtung - in Fig. 1 nach rechts - verschoben, löst sich die Außenverzahnung 113 von dem Zahnrad 115, so dass sich das Zahnrad 115 unabhängig von der Außenverzahnung 113 und damit von dem Ritzel 111, dem Mitnahmeprofil 109 und der Antriebswelle 103 der Schmierstoffpumpe 101 drehen kann. Das Ritzel 111 stellt also eine Kupplung dar, die einen Kraftfluss zwischen dem Zahnrad 115, insbesondere einer Welle, auf der das Zahnrad 115 befestigt ist, und der Antriebswelle 103 des Getriebes 101 schließen und/oder unterbrechen kann.

Zum Verschieben des Ritzels 101 von der ersten Position in die zweite Position und von der zweiten Position in die erste Position ist ein Betätigungselement 117 vorgesehen. Das Betätigungselement 117 besteht aus einer Schaltgabel 119, einem Hubmagnet 121 und einer Feder 123.

Die Schaltgabel 119 ist um eine Drehachse drehbar gelagert, die zwischen den beiden Enden der Schaltgabel 119 angeordnet ist. Ein Ende der Schaltgabel 119 greift in eine Nut 125 des Ritzels 111 ein. Ein weiteres Ende der Schaltgabel 119 ist mit einer Stange 127 des Hubmagnets 121 verbunden.

Eine Aktivierung des Hubmagnets 121 führt zu einer Bewegung der Stange 127 in die erste Richtung. Diese Bewegung setzt die Schaltgabel 119 um in eine Bewegung des Ritzels 111 in die zweite Richtung. Infolgedessen wird der Kraftfluss zwischen dem Zahnrad 115 und der Antriebswelle 103 der Schmierstoffpumpe 101 unterbrochen.

Weiterhin ist die Feder 123 so angeordnet, dass sie durch die Bewegung der Stange 127 in die erste Richtung gespannt wird. Der Hubmagnet 121 wirkt also gegen die Federkraft der Feder 123. Solange der Hubmagnet 121 aktiviert ist, bleibt die Feder 123 gespannt. Wird der Hubmagnet 121 deaktiviert, kann sich die Feder 123 entspannen. Dies führt zu einer Bewegung der Stange 127 in die zweite Richtung. Die Schaltgabel 119 setzt diese Bewegung um in eine Bewegung des Ritzels 111 in die erste Richtung. Die Außenverzahnung 113 und das Zahnrad 115 gelangen infolgedessen in Eingriff. Hierdurch wird ein Lastpfad zwischen dem Zahnrad 115 und der Antriebswelle 103 der Schmierstoffpumpe 101 hergestellt. Über das Zahnrad 115 wird also die Schmierstoffpumpe 101 angetrieben.

Durch eine geeignete Wahl der Übersetzung zwischen dem Zahnrad 115 und dem Ritzel 111 kann die Fördermenge der Schmierstoffpumpe 101 dem zu erwartenden Bedarf angepasst werden.

Um das Einspuren der Außenverzahnung 113 des Ritzels 111 in das Zahnrad 115 zu erleichtern, ist das Ritzel 111 mit einer in axialer Richtung verschiebbaren Hülse 129 versehen. Die Hülse 129 weist die Nut 125 auf. Eine Feder 131 fixiert die Hülse 129 gegenüber dem Ritzel 111 elastisch. Sollten beim Einspuren der Außenverzahnung 113 des Ritzels 111 in das Zahnrad 115 die Zähne des Zahnrads 115 und der Außenverzahnung 113 gegeneinanderstehen, wird durch die Feder 131 eine axiale Vorlast in die erste Richtung auf das Ritzel 111 aufgebracht. Dies führt zu einem Einspuren der Außenverzahnung 113 des Ritzels 111 in das Zahnrad 115, wenn sich das Zahnrad 115 weiterdreht, so dass die Verzahnungen des Zahnrads 115 und die Außenverzahnung 113 geeignet zueinander positioniert sind.

### Bezugszeichen

- 101: Schmierstoffpumpe
- 103: Antriebswelle
- 105: Welle
- 107: Elektromotor
- 109: Mitnahmeprofil
- 111: Ritzel
- 113: Außenverzahnung
- 115: Zahnrad
- 117: Betätigungselement
- 119: Schaltgabel
- 121: Hubmagnet
- 123: Feder
- 125: Nut
- 127: Stange
- 129: Hülse
- 131: Feder

## Patentansprüche

1. Vorrichtung zur Schmierstoffversorgung, mit einer Schmierstoffpumpe (101), die eine Antriebswelle (103) aufweist, mit einem Motor (107), mit mindestens einer Kupplung (109, 111, 113), einer Feder (123) und einem Betätigungselement (121); wobei der Motor (107) ausgebildet ist, die Antriebswelle (103) anzutreiben; wobei die Kupplung ausgebildet ist, einen Kraftfluss zwischen einer im Kraftfluss eines Getriebes befindlichen Welle und der Antriebswelle (103) herzustellen und/oder zu unterbrechen; **dadurch gekennzeichnet, dass**
die Vorrichtung zur Schmierstoffversorgung mindestens einer Komponente des Getriebes ausgebildet ist; wobei
die Feder (123) beim Öffnen der Kupplung (109, 111, 113) gespannt wird; wobei das Betätigungselement (121) ausgebildet ist, die Kupplung (109, 111, 113) zu öffnen, wenn eine elektrische Spannung an dem Betätigungselement (121) anliegt; und wobei
die Federkraft der beim Öffnen der Kupplung (109, 111, 113) gespannten Feder derart wirkt, dass sich die Kupplung (109, 111, 113) schließt, wenn keine elektrische Spannung an dem Betätigungselement (121) anliegt.

2. Vorrichtung nach Anspruch 1, **gekennzeichnet durch**
ein Schaltelement zum Ein- und Ausschalten der elektrischen Spannung.

3. Vorrichtung nach dem vorhergehenden Anspruch, **gekennzeichnet durch**
die elektrische Spannung bei einem Defekt des Motors (107) ausgeschaltet wird.

4. Vorrichtung nach Anspruch 1, **gekennzeichnet durch**
ein erstes Betätigungselement (117) und ein zweites Betätigungselement, wobei das erste Betätigungselement (117) aktiviert wird, wenn die elektrische Spannung anliegt, wobei
das erste Betätigungselement (117) ausgebildet ist, die Kupplung (109, 111, 113) zu öffnen, indem es aktiviert wird, und wobei
das zweite Betätigungselement zwischen dem ersten Betätigungselement (117) und der Kupplung (109, 111, 113) angeordnet ist, sodass
das zweite Betätigungselement die Kupplung (109, 111, 113) schließen kann, wenn das erste Betätigungselement aktiviert ist.

## Claims

1. Apparatus for supplying lubricant, comprising a lubricant pump (101) which has a drive shaft (103), comprising a motor (107), comprising at least one clutch (109, 111, 113), a spring (123) and an operating element (121); wherein the motor (107) is designed to drive the drive shaft (103); wherein the clutch is designed to establish and/or to interrupt a force flow between a shaft which is located in the force flow of a transmission and the drive shaft (103); **characterized in that** the apparatus is designed for supplying lubricant to at least one component of the transmission; wherein the spring (123) is tensioned when the clutch (109, 111, 113) is opened; wherein the operating element (121) is designed to open the clutch (109, 111, 113) when an electrical voltage is applied to the operating element (121); and wherein the spring force of the spring, which is tensioned when the clutch (109, 111, 113) is opened, acts in such a way that the clutch (109, 111, 113) closes when no electrical voltage is applied to the operating element (121) .

2. Apparatus according to Claim 1, **characterized by** a switching element for switching on and switching off the electrical voltage.

3. Apparatus according to the preceding claim, **characterized by** the electrical voltage is switched off when the motor (107) is defective.

4. Apparatus according to Claim 1, **characterized by** a first operating element (117) and a second operating element, wherein the first operating element (117) is activated when the electrical voltage is applied, wherein the first operating element (117) is designed to open the clutch (109, 111, 113) by way of being activated, and wherein the second operating element is arranged between the first operating element (117) and the clutch (109, 111, 113), so that the second operating element can close the clutch (109, 111, 113) when the first operating element is activated.

## Revendications

1. Dispositif d'alimentation en lubrifiant comprenant une pompe à lubrifiant (101) qui présente un arbre d'entraînement (103), comprenant un moteur (107), au moins un embrayage (109, 111, 113), un ressort (123) et un élément d'actionnement (121) ; le moteur (107) étant réalisé de manière à entraîner l'arbre d'entraînement (103) ;
l'embrayage étant réalisé de manière à établir un flux de forces entre un arbre se trouvant dans le flux de forces d'une transmission et l'arbre d'entraînement (103) et/ou de manière à interrompre ce flux de forces ;
**caractérisé en ce que**
le dispositif est réalisé pour alimenter en lubrifiant au moins un composant de la transmission ;
le ressort (123) étant tendu lors de l'ouverture de l'embrayage (109, 111, 113) ;
l'élément d'actionnement (121) étant réalisé pour ouvrir l'embrayage (109, 111, 113) lorsqu'une tension électrique est appliquée à l'élément d'actionnement (121) ; et
la force de ressort du ressort tendu lors de l'ouverture de l'embrayage (109, 111, 113) agissant de telle sorte que l'embrayage (109, 111, 113) se ferme lorsqu'aucune tension électrique n'est appliquée à l'élément d'actionnement (121).

2. Dispositif selon la revendication 1, **caractérisé par** un élément de commutation pour appliquer et couper la tension électrique.

3. Dispositif selon la revendication précédente, **caractérisé par** la tension électrique est coupée en cas de défaillance du moteur (107).

4. Dispositif selon la revendication 1, **caractérisé par**
un premier élément d'actionnement (117) et un deuxième élément d'actionnement, le premier élément d'actionnement (117) étant activé lorsque la tension électrique est appliquée,
le premier élément d'actionnement (117) étant réalisé pour ouvrir l'embrayage (109, 111, 113) par le fait qu'il est activé et
le deuxième élément d'actionnement étant disposé entre le premier élément d'actionnement (117) et l'embrayage (109, 111, 113), de telle sorte que le deuxième élément d'actionnement puisse fermer l'embrayage (109, 111, 113) lorsque le premier élément d'actionnement est activé.
